# EUROPÄISCHE PATENTANMELDUNG

(11) **EP 0 773 093 A1**
(43) Veröffentlichungstag der Anmeldung: **14.05.1997**
(21) Anmeldenummer: 96113976.3
(22) Anmeldetag: 31.08.1996
(51) Int. Cl.: B29C 33/56, B29C 44/58, B29C 33/62

(54) **Beschichtete Form für die Herstellung von Formteilen aus geschäumten Latex**

(30) Priorität: 08.11.1995 DE 19541590
(71) Anmelder: HÜLS AKTIENGESELLSCHAFT, 45764 Marl (DE)
(72) Erfinder: Landwehr, Dierk, Dr., 48249 Dülmen (DE)

(57) **Zusammenfassung**

Beschichtete Form für die Herstellung von Formteilen aus geschäumtem Latex, wobei die Form im Innern eine Niedrig-Energie-Oberfläche mit einer Oberflächenspannung von weniger als 0,025 N/m aufweist.

## Beschreibung

Für die Herstellung von Formteilen aus geschäumtem Latex werden heute überwiegend dampfbeheizte Formen aus Metall, z. B. Stahl oder Aluminium, verwendet. In diesen Formen erfolgt die Gelierung und Vulkanisation des aus einer wäßrigen Dispersion eines Polymeren bestehenden Latex. Die Alternative zur Beheizung mit Dampf stellt die Erwärmung im Mikrowellenfeld dar (EP 0 377 808 A1). Dabei können jedoch wegen elektromagnetischer Effekte keine Metallformen verwendet werden, sondern es müssen Formen aus mikrowellengeeigneten Kunststoffen (EP 0 560 011 A1) eingesetzt werden.

Beide Methoden weisen aber den Nachteil auf, daß die Entformung der zum Teil komplizierten Formteilgeometerien nur unter Einsatz eines Trennmittels, wie z. B. einer wäßrigen Polywachslösung, möglich ist. Diese Polywachse werden vor dem Füllen auf die leere Form aufgesprüht und stellen sowohl beim Aufbringen als auch bei der Entformung der heißen Formteile eine erhebliche Imissionsbelastung des Bedienpersonals und der Umgebung dar. Die in EP 0 560 011 A1 beschriebenen Passivierungsmethoden für die Kunststofformoberflächen reduzieren diese Belastung nur geringfügig.

Die DE-OS 41 18 184 offenbart eine Beschichtungszusammensetzung auf der Basis von Polykondensaten von einer oder mehreren hydrolysierbaren Verbindungen mit mindestens einem Element M aus den Hauptgruppen III bis V und den Nebengruppen II bis IV des Periodensystems der Elemente, beispielsweise B, Al, Si, Sn, Ti, Zr, u. a. m., wobei zumindest ein Teil dieser Verbindungen neben hydrolysierbaren Gruppen A, wie beispielsweise Halogene, Alkoxygruppen mit 1 bis 4 C-Atomen, Aryloxygruppen, Acryloxygruppen, Methacryloxygruppen, Alkylcarbonylgruppen, auch nicht hydrolysierbare kohlenstoffhaltige Gruppen B, beispielsweise Alkylgruppen mit 1 bis 4 C-Atomen, Alkenylgruppen mit 2 bis 4 C-Atomen, Alkinylgruppen, Arylgruppen sowie zuvor genannten Gruppen mit Substituenten, wie Halogene, Hydroxy-, Alkoxy-, Epoxi-, Amino-, Aminoalkylgruppen, aufweist und das Gesamt-Molverhältnis von Gruppen A zu Gruppen B in den zugrundeliegenden monomeren Ausgangsverbindungen 10 : 1 bis 1 : 2 beträgt, wobei im wesentlichen 0,1 bis 100 Mol.-% der Gruppen B Gruppen B' sind, die durchschnittlich 2 bis 30 Fluoratome aufweisen, die an ein oder mehrere aliphatische Kohlenstoffatome gebunden und die durch mindestens zwei Atome von M getrennt sind.

Die DE-OS 41 18 184 lehrt ferner die Verwendung der Beschichtungszusammensetzungen für solche Gegenstände, bei denen eine schmutz-, wasser- sowie ölabweisende Oberfläche erwünscht ist, insbesondere zur Beschichtung von Gläsern.

Der EP-A 0 171 493 sind Lackzusammensetzungen und ein Verfahren zur Herstellung kratzfester Beschichtungen zu entnehmen. Ferner lehrt die DE-PS 38 36 815 die Herstellung kratzfester Materialien.

Der Erfindung liegt die Aufgabe zugrunde, die Oberflächen von Formen für die Herstellung von Formteilen aus geschäumtem Latex mit einer Beschichtung zu versehen, die den Einsatz von zusätzlichen Trennmitteln überflüssig macht und die für alle Formenarten und -materialien geeignet ist.

Die Aufgabe wird erfindungsgemäß dadurch gelöst, daß auf die Formenoberfläche eine Niedrig-Energie-Oberfläche ausgebildet wird, die eine Anhaftung des Latexschaumes sicher verhindert. Solche Oberflächenbeschichtungen sind durch eine Oberflächenspannung von kleiner 0,025 N/m gekennzeichnet.

Gegenstand der vorliegenden Erfindung ist demnach eine beschichtete Form für die Herstellung von Formteilen aus geschäumtem Latex, dadurch gekennzeichnet, daß die Form im Innern eine Niedrig-Energie-Oberfläche mit einer Oberflächenspannung von weniger als 0,025 N/m aufweist.

Diese Eigenschaften weisen Beschichtungen aus polymeren Kohlenwasserstoff-Halogenverbindungen, wie z. B. Teflon auf. Der Bau ganzer Formen aus PTFE kommt jedoch wegen des hohen spezifischen Gewichtes nicht in Frage.

In einer besonderen Ausführungsform können hier fluororganosilanhaltigen Zubereitungen, wie sie aus der DE-OS 41 18 184 bekannt sind, erfindungsgemäß eingesetzt werden.

In der Regel verfährt man bei der Herstellung der Beschichtungszusammensetzung so, daß man alle oder einen Teil der Ausgangsverbindungen, zunächst ohne die der Gruppe B', durch Zugabe von Wasser hydrolysiert oder vorkondensiert. Dann erfolgt geeigneterweise die Zugabe der Ausgangsverbindung der Gruppe B'. Nach Reaktion der zugegebenen Komponenten mit den bereits vorhandenen vorhydrolysierten Ausgangsverbindungen bzw. Vorkondensaten kann durch Zugabe von weiterem Wasser und gegebenenfalls der restlichen bzw. übrigen Ausgangsverbindungen die Hydrolyse und Kondensation der anwesenden Spezies bis zum Erhalt eines für eine Beschichtung geeigneten Systems weitergeführt werden. Hydrolyse und Vorkondensation werden üblicherweise unter Rühren und bei Raumtemperatur durchgeführt, die Umsetzung kann aber bei einer höheren Temperatur erfolgen. Die Zugabe der Ausgangsverbindungen mit Gruppen B', erfolgt geeigneterweise erst, wenn der Wassergehalt des Systems nicht mehr als 5 Gew.-%, bezogen auf das Gewicht des Gesamtsystems ohne gegebenenfalls eingesetzte Lösemittel, beträgt und nicht mehr als 50 % der theoretisch möglichen Gruppen M-OH im System vorliegen, wobei der pH-Wert geeigneterweise zwischen 3 und 9 liegt, vorzugsweise bei einem pH-Wert zwischen 4 und 6,5.

Beispiele für bevorzugte organofunktionelle Silane mit Gruppen B sind:
Si(OCH₃)₄, Si(OC₂H₅)₄, Si(OC₃H₇)₄, Si(OC₄H₉)₄, SiCl₄, HSiCl₃, Si(OOCCH₃)₄, CH₃SiCl₃, CH₃Si(OC₂H₅)₃, C₂H₅SiCl₃, C₂H₅Si(OC₂H₅)₃, C₃H₇Si(OCH₃)₃, C₆H₅Si(OCH₃)₃, C₆H₅Si(OC₂H₅)₃, Cl(CH₂)₃Si(OCH₃)₃, (CH₃)₂SiCl₂, (CH₃)₂Si(OCH₃)₂, (CH₃)₂Si(OC₂H₅)₂, (CH₃)₂Si(OH)₂, (C₆H₅)₂SiCl₂, (C₆H₅)₂Si(OCH₃)₂, (C₆H₅)₂Si(OC₂H₅)₂, (i-C₃H₇)₃SiOH, CH₂=CHSi(OOCCH₃)₃, CH₂=CHSiCl₃, CH₂=CHSi(OCH₃)₃, CH₂=CHSi(OC₂H₅)₃, CH₂=CHSi(OC₂H₄OCH₃)₃, CH₂=CHCH₂Si(OCH₃)₃, CH₂=CHCH₂Si(OC₂H₅)₃, CH₂=CHCH₂Si(OOCCH₃)₃, CH₂=C(CH₃)COO(CH₂)₃Si(OCH₃)₃, CH₂=C(CH₃)COO(CH₂)₃Si(OC₂H₅)₃, CH₂=CHCOO(CH₂)₃Si(OC₂H₅)₃, H₂NC₆H₄Si(OC₂H₅)₃, H₂N(CH₂)₃Si(OCH₃)₃, H₂N(CH₂)₃Si(OC₂H₅)₃, H₂N(CH₂)₃Si(CH₃)(OC₂H₅)₂, H₂N(CH₂)₂NH(CH₂)₃Si(CH₃)(OCH₃)₂, H₂N(CH₂)₂NH(CH₂)₃Si(OCH₃)₃, H₃CNH(CH₂)₃Si(OCH₃)₃, NC(CH₂)₃Si(OC₂H₅)₃, HS(CH₂)₃Si(OCH₃)₃, HS(CH₂)₃Si(OC₂H₅)₃, HS(CH₂)₃Si(CH₃)(OCH₃)₂, H₂NCONH(CH₂)₃Si(OC₂H₅)₃,

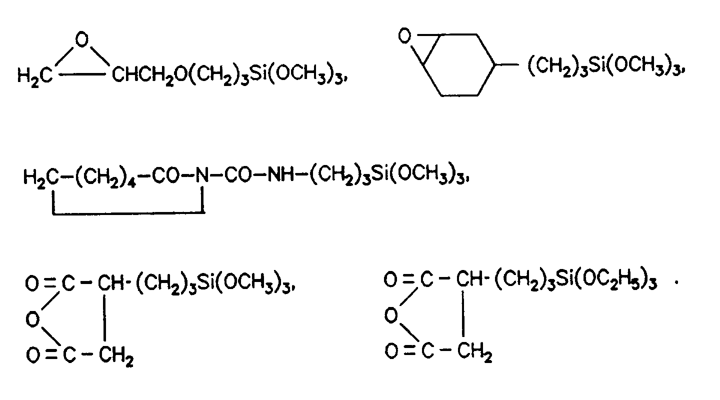

Beispiele für bevorzugte Fluororganosilane mit Gruppen B' sind:
CF₃-(CH₂)₂SiX₃, C₂F₅-(CH₂)₂SiX₃, C₄F₉-(CH₂)₂SiX₃, n-C₆F₁₃-(CH₂)₂SiX₃, n-C₈F₁₇-(CH₂)₂SiX₃, n-C₁₀F₂₁-(CH₂)₂SiX₃,
wobei X hydrolysierbare Gruppen sind, insbesondere (OCH₃), (OC₂H₅) und/oder Cl.

Für die Zubereitung der Beschichtungszusammensetzung für die Herstellung der erfindungsgemäßen Formen werden Alkoxide mit 1 bis 4 C-Atomen des Bors und/oder Aluminiums und/oder Zinns und/oder Titans und/oder Zirkons und/oder organofunktionelle Silane und Fluororganosilane und/oder deren Hydrolysate und/oder deren Kondensate enthalten, wobei die hier eingesetzten Silane bevorzugt mindestens eine Alkoxygruppe besitzen, verwendet.

Geeigneterweise können die Zubereitungen darüber hinaus auch noch andere Bestandteile enthalten, so z. B. Lösemittel - wie Alkohole mit 1 bis 4 C-Atomen, Ether, aromatische Kohlenwasserstoffe, Ketone, Ester -; Carbonsäuren, beispielsweise Acrylsäure, Methacrylsäure; ungesättigte organische Verbindungen, wie Styrol, Nitrile; Netzhilfsmittel; Filmbildner; Füllstoffe; Färbemittel; Oxidationsinhibitoren; UV-Absorber; Katalysatoren für eine photochemische und/oder thermische iniziierte Härtung und andere Stoffe, wie sie für Lacke bekannt sind.

Das Aufbringen der Zubereitung auf die Innenflächen der zu beschichtenden Form erfolgt in der Regel durch Sprühen, Tauchen oder Streichen oder einer anderen diesbezüglich bekannten Arbeitsweise. Üblicherweise erfolgt vor der Härtung der Beschichtungszusammensetzung eine Trocknungsphase, geeigneterweise bei Raumtemperatur. Die Härtung der Beschichtungszusammensetzung kann durch eine thermisch und/oder photochemisch iniziierte Polymerisation erfolgen, beispielsweise durch Bestrahlung der getrockneten Beschichtungszusammensetzung mit einer IR- oder UV-Lampe oder anderen Licht- bzw. Wärmequellen. Die Schichtdicken liegen üblicherweise im Bereich von 0,001 bis 1 mm, bevorzugt 0,01 bis 0,1 mm.

Vor dem Aufbringen der Zubereitung können die Oberflächen der Form durch bekannte Verfahren aktiviert werden.

Die beschichteten Formen sind aus Metall oder Kunststoffen aufgebaut und bestehen bevorzugt aus Aluminium und Stahl bzw. Edelstahl für die dampfbeheizten Formen oder aus mikrowellenkompatiblen Polymeren, wie z. B. Polypropylen, Polycarbonat, Polyphenylenether, Polytetrafluorethylen sowie der Kombination dieser Materialien.

Die erfindungsgemäß beschichteten Formen sind langlebig und langzeitstabil. Nach der Benutzung benötigen die beschichteten Oberflächen keiner regelmäßigen Nachbehandlung. Der Einsatz von Trennmitteln ist bei den erfindungsgemäßen Formen überflüssig.

Neben der Emissionsreduzierung ist dadurch die Entformungsarbeit wesentlich vereinfacht und eine Beschädigung der Formteiloberfläche durch ausgerissene, an der Form anhaftende Latexteile wird zuverlässig verhindert. Eine Beeinträchtigung der Eigenschaften des Latexschaumes und des Verarbeitungsverfahrens darf durch die Beschichtung nicht auftreten.

## Patentansprüche

1. Beschichtete Form für die Herstellung von Formteilen aus geschäumtem Latex,
dadurch gekennzeichnet,
daß die Form im Innern eine Niedrig-Energie-Oberfläche mit einer Oberflächenspannung von weniger als 0,025 N/m aufweist.

2. Beschichtete Form nach Anspruch 1,
dadurch gekennzeichnet,
daß die Form aus Metall oder Kunststoff aufgebaut ist.

3. Beschichtete Form nach Anspruch 2,
dadurch gekennzeichnet,
daß die Form aus Aluminium oder Aluminiumlegierungen und Stahl aufgebaut ist.

4. Beschichtete Form nach Anspruch 2,
dadurch gekennzeichnet,
daß die Form aus Polypropylen, Polycarbonat, Polyphenylenether, Polytetrafluorethylen oder anderen mikrowellengeeigneten Polymeren aufgebaut ist.

5. Beschichtete Form nach einem der vorherigen Ansprüche 1 bis 4,
dadurch gekennzeichnet,
daß die Oberflächen mit einer Zubereitung, die Alkoxide des Bors und/oder Aluminiums und/oder Zinns und/oder Titans und/oder Zirkons und/oder organofunktionelle Silane und Fluororganosilane und/oder deren Hydrolysate und/oder deren Kondensationsprodukte enthalten, beschichtet sind.

6. Beschichtete Form nach einem der Ansprüche 1 bis 4,
dadurch gekennzeichnet,
daß die Oberflächen mit Teflon beschichtet sind.

7. Verfahren zur Herstellung von beschichteten Formen für die Herstellung von Formteilen aus geschäumtem Latex,
dadurch gekennzeichnet,
daß die Formen mit einer Niedrig-Energie-Oberfläche mit einer Oberflächenspannung von weniger als 0,025 N/m beschichtet werden.

8. Verfahren nach Anspruch 7,
dadurch gekennzeichnet,
daß die Beschichtung durch Sprühen, Tauchen oder Streichen aufgebracht wird.

9. Verwendung von einer Zubereitung, die Alkoxide des Bors und/oder Aluminiums und/oder Zinns und/oder Titans und/oder Zirkons und/oder organofunktionelle Silane und Fluororganosilane und/oder deren Hydrolysate und/oder deren Kondensationsprodukte enthalten, zur Beschichtung von Formen für die Herstellung von Formteilen aus geschäumtem Latex.

10. Verwendung von Teflon zur Beschichtung von Formen für die Herstellung von Formteilen aus geschäumtem Latex.
